Europäisches Patentamt

European Patent Office

Office européen des brevets

(19)

(11) Veröffentlichungsnummer: **0 064 545**
**B1**

(12) **EUROPÄISCHE PATENTSCHRIFT**

(45) Veröffentlichungstag der Patentschrift:
29.04.87

(21) Anmeldenummer: **81903243.4**

(22) Anmeldetag: **12.11.81**

(86) Internationale Anmeldenummer:
**PCT/DE 81/00199**

(87) Internationale Veröffentlichungsnummer:
**WO 82/01752 (27.05.82 Gazette 82/14)**

(51) Int. Cl.⁴: **F 16 D 27/14**, F 16 D 63/00,
F 16 D 27/10

(54) **REIBMOMENTERZEUGER.**

(30) Priorität: **14.11.80 DE 3043002**

(43) Veröffentlichungstag der Anmeldung:
**17.11.82 Patentblatt 82/46**

(45) Bekanntmachung des Hinweises auf die Patenterteilung:
**29.04.87 Patentblatt 87/18**

(84) Benannte Vertragsstaaten:
**AT CH DE FR GB LI SE**

(56) Entgegenhaltungen:
FR-A-1 105 100
FR-A-1 185 674
GB-A-728 121
GB-A-900 546
GB-A-1 131 668
US-A-3 899 061
US-A-3 961 692

S. Hildebrand, "Feinmechanische Bauelemente", 3.
Auflage, 1978 Carl Hanser Verlag, München/Wien,
Seiten 628 bis 633

(73) Patentinhaber: **Dr.- Ing. Ludwig Pietzsch GmbH &
Co., Hertzstrasse 32- 34, D-7505 Ettlingen (DE)**

(72) Erfinder: **SUCHANEK, Günter, Vordersteig 38,
D-7505 Ettlingen (DE)**
Erfinder: **STEHLIN, Bernhard, Heideweg 19, D-7500
Karlsruhe (DE)**

(74) Vertreter: **Liesegang, Roland, Dr.- Ing.,
Sckellstrasse 1, D-8000 München 80 (DE)**

## Beschreibung

Die Erfindung betrifft einen Reibmomenterzeuger in Gestalt einer regelbaren, im Dauerschlupf betreibbaren Elektromagnetkupplung oder -bremse mit einem antreibbaren Rotor, einer durch Magnetkraft in Richtung gegen den Rotor relativ bewegbaren Ankerscheibe sowie einem Reibbelag aus nicht magnetisierbarem Material, der über die Oberfläche seines Trägers vorsteht und im Betrieb über eine Wirkfläche mit einer Gegenflüche an der Ankerscheibe oder an dem Rotor reibschlüssig zusammenwirkt, wie aus GB-A-1,131,668 bekannt.

Bei anderen bekannten regelbaren Elektromagnet-Kupplungen wird der Rotor mit dem Reibbelag auf der Wirkseite planbearbeitet. Im Betrieb kommt die Wirkfläche der Ankerscheibe mit dieser Fläche in Kontakt. Dabei entsteht Reibung sowohl zwischen dem magnetisierbaren, metallischen Material der Ankerscheibe und dem aus Sintermaterial, insbesondere Sinterkohle, bestehenden Material des Reibbelages als auch zwischen dem Material der Ankerscheibe und dem gewöhnlich metallischen Material des Rotors. Hierbei entsteht insbesondere bei Dauerschlupf ein Abrieb, der unerwünscht insofern ist, als er den Reibwert zwischen Rotor und Ankerscheibe und damit das übertragbare Drehmoment stark schwanken läßt.

Bei im Dauerschlupf arbeitenden Reibpaarungen kann die mittlere Flächenleistung des Reibbelages durch die Reibleistung angegeben werden, die sich aus dem Produkt aus relativer Reibgeschwindigkeit v der die Reibpaarung bildenden beiden Bauteile und der spezifischen Reibkraft R je Flächeneinheit in Umfangsrichtung errechnet:

$$L = R.v \ (W/cm^2)$$

mit $R = \mu.F$ ($\mu$ = Reibwert, F = Anpreßkraft).

Je nach Kühlmöglichkeit, Werkstoff des Reibbelages und Werkstoff der Kupplungsscheibe sind unterschiedliche Flächenleistungen zulässig.

Bei kontinuierlich arbeitenden Elektromagnet-Kupplungen, die im Dauerschlupf betätigt werden, sind Flächenleistungen L von ca. 1,5 $W/cm^2$ bis ca. 2,5 $W/cm^2$ zulässig. Der Abrieb, der an den Reibflächen entsteht, hängt sehr stark von der spezifischen Oberflächenbelastung des Reibbelages ab. Wenn die Flächenleistung über dem zulässigen Wert liegt, nehmen die Erwärmung stark und in erhöhtem Maße der Verschleiß des Reibbelages zu. Bei Belastungen, die unter der spezifischen Oberflächenbelastung des Reibbelages liegen, nimmt der Verschleiß des Reibbelages sehr stark ab.

Der Erfindung liegt die Aufgabe zugrunde, einen Reibmomenterzeuger der eingangs beschriebenen Art zu schaffen, bei dem über die gesamte Lebensdauer oder mindestens über eine lange Betriebsdauer der Reibwert zwischen der Wirkfläche und der Gegenfläche praktisch konstant bleibt.

Zur Lösung dieser Aufgabe sind erfindungsgemäß bei einem Reibmomenterzeuger der eingangs beschriebenen Art die kennzeichnenden Merkmale des Anspruchs 1 vorgesehen.

Überraschenderweise bleibt der Reibwert eines nach der Erfindung ausgebildeten Reibmomenterzeugers auch bei Betrieb mit wechselnder Last und im Dauerschlupf über eine lange Betriebsdauer in engen Grenzen konstant.

Die Erfinder haben in Versuchen festgestellt, daß die Grenze der Flächenleistung etwa bei $L \leq$ 0,5 $W/cm^2$ liegen sollte und daß unterhalb einer Flächenleistung von $L \leq$ 0,2 $W/cm^2$ ganz sicher kein meßbarer Abrieb mehr auftritt.

Mit den Maßnahmen nach der Erfindung ist erreicht, daß ein Abrieb über die Lebensdauer des Reibmomenterzeugers nicht feststellbar ist und damit die Reibbelagsstärke über die gesamte Lebensdauer des Reibmomenterzeugers praktisch gleichbleibt. Dies hat zur Folge, daß immer nur das Material des Reibbelages und nicht auch noch das metallische Material des Rotors oder der Ankerscheibe mit der Gegenfläche an Ankerscheibe oder Rotor in Eingriff kommt. Vorzugsweise steht der Reibbelag gegenüber dem Bauteil, an welchem er angebracht ist, um nicht weniger als 0,04 mm vor.

Es ist bevorzugt, daß der Reibbelag wie üblich am Rotor angebracht ist und die Gegenfläche an der Ankerscheibe vorgesehen ist. Es ist selbstverständlich, daß die Erfindung aber mit gleicher Wirkung auch dann angewendet werden kann, wenn der Reibbelag an der Ankerscheibe und nicht am Rotor angeordnet ist. In diesem Fall steht der Reibbelag gegenüber der Ankerscheibe um die genannte Höhe vor.

Mit der Konstanthaltung des Reibwertes wird erreicht, daß das von der Kupplung übertragbare Drehmoment ebenfalls konstant gehalten wird.

Im Hinblick auf die Minimierung des Abriebes hat sich als vorteilhaft erwiesen, die Wirkfläche des Reibbelages mit einer Rauhtiefe von weniger als 4 $\mu$ planfeinstzubearbeiten. Es kann auch die Gegenfläche planfeinstbearbeitet sein, vorzugsweise ebenfalls mit einer Rauhtiefe von weniger als 4 $\mu$m.

Es ist an sich bekannt, die Wirkfläche der Ankerscheibe mit Vertiefungen zur Aufnahme und ggf. Abfuhr von Abrieb zu versehen. Gemäß einer wichtigen weiteren Ausgestaltung der Erfindung sind in diesem Fall die Kanten der Vertiefungen gebrochen.

Die Erfindung ist im folgenden anhand schematischer Zeichnungen an Ausführungsbeispielen mit weiteren Einzelheiten näher erläutert.

Fig. 1 zeigt in Seitenansicht schematisch die wesentlichen Bauteile eines Reibmomenterzeugers gemäß der Erfindung;

Fig. 2 und 3 zeigen in Draufsicht die Wirkflächen unterschiedlich gestalteter Ankerscheiben, wie sie bei dem Reibmomenterzeuger nach Fig. 1 einsetzbar sind;

Fig. 4 zeigt einen Achsschnitt durch einen ausgeführten, regelbaren Reibmomenterzeuger gemäß der Erfindung;

Fig. 5 zeigt ein Blockschaltbild des Regelkreises zur Regelung des Reibmomenterzeugers nach Fig. 4.

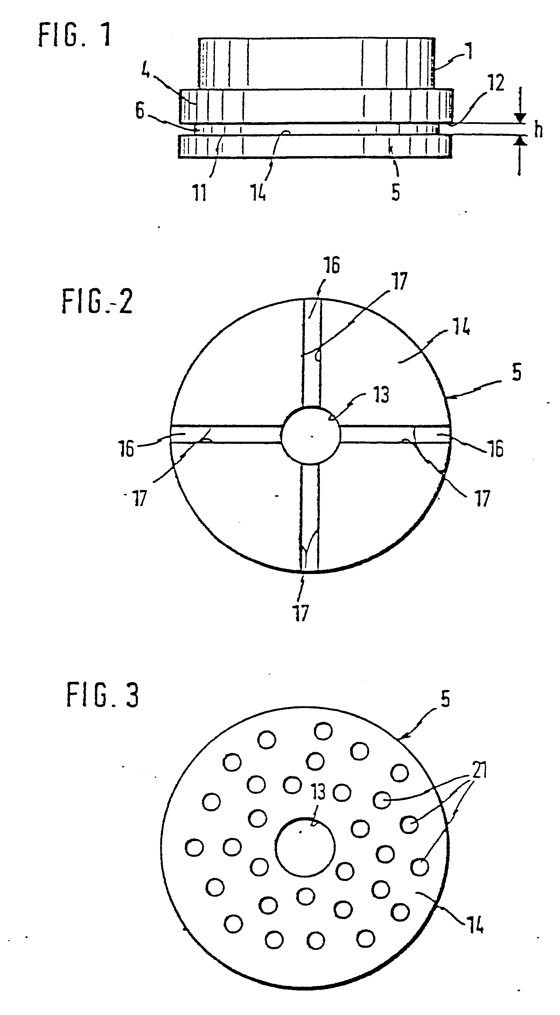

Fig. 1 zeigt schematisch einen Reibmomenterzeuger in Gestalt einer Elektromagnetkupplung mit Stator 1, der eine hier nicht gezeigte Stromspule enthält, Rotor 4 mit darin untergebrachtem Reibbelag 6 aus nicht magnetisierbarem Material, der eine Wirkfläche 11 aufweist, und Ankerscheibe 5 aus magnetisierbarem Material, die eine Gegenfläche 14 zur Wirkfläche 11 aufweist und bei Betätigung der Stromspule durch das aufgebaute Magnetfeld an den Rotor 4 angezogen wird. In der Mitte hat die Ankerscheibe ein Durchsteckloch 13 zum Auffädeln auf eine Welle. Die Gegenfläche 14 der Ankerscheibe 5 ist von vier senkrecht zueinander stehenden Durchbrüchen 16 unterbrochen, welche zur Aufnahme und Abfuhr von Abrieb dienen sollen.

Der Rotor 4 ist mittels eines nicht gezeigten Antriebes, wie eines Elektromotors, antreibbar.

Die Kanten 17 der Durchbrüche sind gebrochen. Ferner ist der Rand 12 des Rotors 4, welcher zur Gegenfläche 14 der Ankerscheibe 5 hinweist, um eine Höhe h von etwa 4/100 mm abgedreht.

Der Reibbelag 6 ist aus Sinterkohle gefertigt und derart plangeschliffen, daß die verbleibende Rauhtiefe gleich oder kleiner als 4 μm ist. Diese Maßnahmen führen dazu, daß praktisch kein Abrieb des Reibbelagmaterials entsteht, was ausschließt, daß während der Lebensdauer der Kupplung die Reibbelagstärke abnimmt und damit auch der Rand 12 des Rotors 4 mit der Wirkfläche 14 der Ankerscheibe 5 in Kontakt kommt.

Die Flächenleistung der Kupplung wird durch entsprechende Abstimmung von Anpreßkraft, d. h. spezifischer Reibkraft R, und Geschwindigkeit v auf einen Wert von $L \leq 0,5 \ W/cm^2$ eingestellt, vorzugsweise auf $L \leq 0,2 \ W/cm^2$.

Durch alle diese Maßnahmen wird überraschenderweise eine sehr hohe Reibwertkonstanz zwischen der Wirkfläche 11 und der Gegenfläche 14 auch noch nach langer Betriebdauer erzielt.

Nach von den Erfindern durchgeführten Versuchen konnte für Flächenleistungen, die bei einem Wert von ca. $0,2 \ W/cm^2$ lagen, von Reibbelägen aus Sinterkohle nach 1000 Stunden Dauerbelastung nach dem Einlaufen kein meßbarer Abrieb festgestellt werden.

Fig. 3 zeigt in vereinfachter Darstellung eine Ausführung einer Ankerscheibe 5, bei welcher anstelle der gradlinigen Durchbrüche 16 Durchgangslöcher 21 vorgesehen sind. Die Kanten dieser Löcher sind vorteilhaft ebenfalls gebrochen. Überraschenderweise läßt sich auch durch diese neue Gestaltung der Reibwert in Richtung auf hohe Reibwertkonstanz günstig beeinflussen.

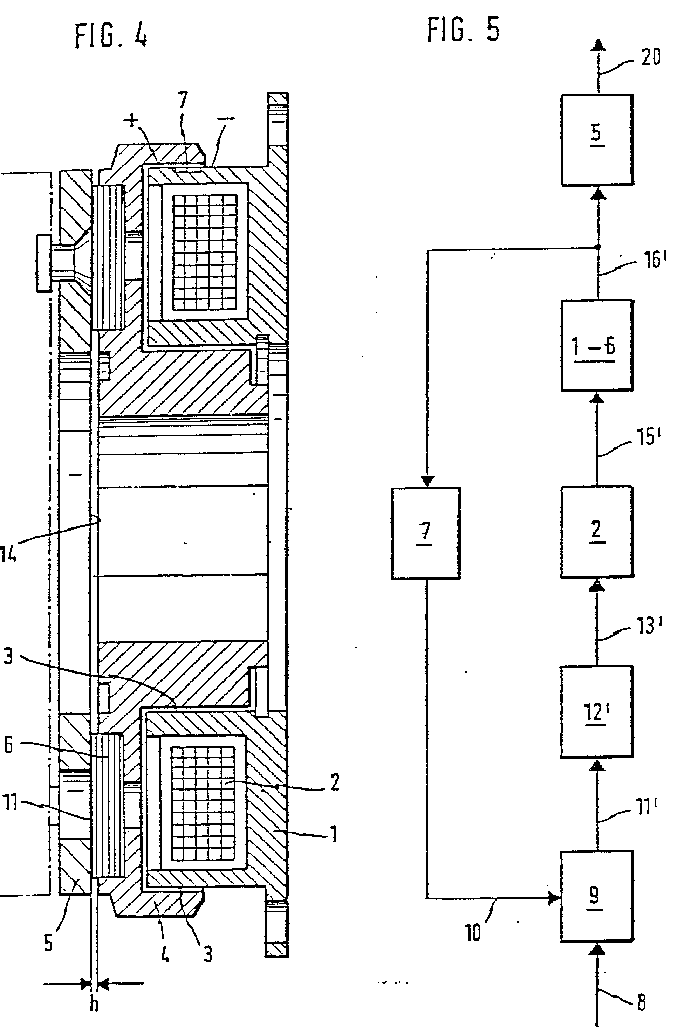

Fig. 4 zeigt einen ausgeführten Reibmomenterzeuger in Gestalt einer schleifringlosen Elektromagnet-Kupplung, wie sie in Verbindung mit einem Antrieb als Stellvorrichtung zum Aufbringen eines Richt- bzw. Nachführmomentes auf eine schwenkbar an einer Unterlage gelagerte Vorrichtung (nicht gezeigt) eingesetzt ist. Die Elektromagnet-Kupplung hat wie üblich einen Stator 1 mit einer Stromspule 2. Der Stator 1 ist von dem Rotor 4 und der Ankerscheibe 5 durch einen Luftspalt 3 getrennt. Im Rotor 4 ist ein Reibbelag 6 untergebracht. Wird die Stromspule 2 erregt, so wird ein magnetisches Feld erzeugt, unter dessen Wirkung die Ankerscheibe 5 gegen den Reibbelag 6 gepreßt wird. Hierdurch wird bei erregter Stromspule 2 die Ankerscheibe 5 von dem Reibbelag 6 des ständig z. B. elektromotorisch angetriebenen Rotor 4 mitgenommen. Der Abstand h und die Anwendung der oben anhand der Fig. 1 beschriebenen Maßnahmen gewährleistet , daß das übertragene Drehmoment, das von der Ankerscheibe abgenommen werden kann, auch bei langer Betriebsdauer stets proportional zu dem in der Elektromagnetspule erzeugten Magnetfeld bleibt, d.h. keine durch Reibwertänderungen bedingte Schwankungen aufweist. Die Feldstärke des Magnetfeldes wird im Luftspalt 3 mittels einer Feldplatte 7 gemessen, welche eine zur Feldstärke proportionale elektrische Spannung abgibt.

Die magnetische Feldstärke des von der Stromspule erregten Magnetfeldes wird zu dem Zweck geregelt, die bei Elektromagnet-Kupplungen der beschriebenen Art verhältnismäßig hohe Tot- bzw. Einstellzeit abzukürzen. Hierzu ist ein interner Regelkreis gemäß Fig. 5 vorgesehen.

Das einem gewünschten Stellmoment der Elektromagnet-Kupplung proportionale Sollsignal wird bei 8 in den Regelkreis eingespeist und einem Differenzverstärker 9 zugeführt, wo das Sollsignal mit einem durch die Messung mittels der Feldplatte 7 gewonnenen und bei 10 in den Differenzverstärker e..igeführten Istsignal verglichen wird. Die Signaldifferenz 11' wird in einem Spannungsverstärker 12' verstärkt, mit dessen Ausgangsspannung 13' die Stromspule 2 der Elektromagnet-Kupplung angesteuert wird. Der sich gegen die Induktivität der Elektromagnet-Kupplung aufbauende Statorstrom 15' erzeugt ein Magnetfeld 16', das sich über die Eisenteile und den Luftspalt 3 der Elektromagnet-Kupplung 1 bis 6 schließt. Das so verstärkte Magnetfeld wird erneut mittels der Feldplatte 7 gemessen, welche das Istsignal über 10 zum Differenzverstärker 9 zurückführt. Die Ankerscheibe 5 und der Rotor 4 der Kupplung erzeugen ein dem geregelten Magnetfeld 16' proportionales Drehmoment nach einer dank der Regelung sehr kurzen Ansprechzeit in der Größenordnung von Millisekunden, wobei dieses Drehmoment von der Ankerscheibe 5 bis 20 abgegeben wird.

## Patentansprüche

1. Reibmomenterzeuger in Gestalt einer regelbaren, im Dauerschlupf betreibbaren Elektromagnetkupplung oder -bremse mit einem antreibbaren Rotor, einer durch Magnetkraft in Richtung gegen den Rotor relativ bewegbaren Ankerscheibe sowie einem Reibbelag aus nicht magnetisierbarem Material, der über die Oberfläche seines Trägers vorsteht und im Betrieb über eine Wirkfläche mit einer Gegenfläche an der Ankerscheibe oder an dem Rotor reibschlüssig zusammenwirkt, dadurch gekennzeichnet, daß der Reibbelag (6) aus Sinterkohle besteht, daß die Wirkfläche des Reibbelages feinstbearbeitet ist und daß die Flächenleistung (L) der Reibpaarung zwischen Wirkfläche (11) und Gegenfläche (14) unterhalb einer Grenze von etwa L $\leq$ 0,5 W/cm$^2$, vorzugsweise von L $\leq$ 0,2 W/cm$^2$ gehalten ist.

2. Reibmomenterzeuger nach Anspruch 1, dadurch gekennzeichnet, daß der Reibbelag (6) gegenüber dem Bauteil (4), an welchem er angebracht ist, um nicht weniger als 0,04 mm vorsteht.

3. Reibmomenterzeuger nach Anspruch 2, dadurch gekennzeichnet, daß der Reibbelag (6) am Rotor (4) angebracht ist, daß die Gegenfläche (14) an der Ankerscheibe (5) vorgesehen ist.

4. Reibmomenterzeuger nach einem der Ansprüche 1 bis 3, dadurch gekennzeichnet, daß die Wirkfläche (11) des Reibbelages mit einer Rauhtiefe von weniger als 4 μm planfeinstbearbeitet ist.

5. Reibmomenterzeuger nach einem der Ansprüche 1 bis 4, dadurch gekennzeichnet, daß auch die Gegenfläche (14) planfeinstbearbeitet ist, vorzugsweise mit einer Rauhtiefe von weniger als 4 μm.

6. Reibmomenterzeuger nach Anspruch 7, dadurch gekennzeichnet, daß die Wirkfläche (11) oder die Gegenfläche (14) mit Vertiefungen zur Aufnahme und ggf. Abfuhr von Abrieb versehen ist.

7. Reibmomenterzeuger nach Anspruch 6, dadurch gekennzeichnet, daß die Kanten (17) der Vertiefungen (16, 21) gebrochen sind.

8. Reibmomenterzeuger nach Anspruch 6 oder 7, dadurch gekennzeichnet, daß die Vertiefungen von geraden Durchbrüchen (16) oder Lochungen (21) gebildet sind.

9. Reibmomenterzeuger nach einem der Ansprüche 1 bis 8, dadurch gekennzeichnet, daß die magnetische Feldstärke des von der Stromspule (2) des Elektromagneten erregten Magnetfeldes geregelt ist.

10. Reibmomenterzeuger nach Anspruch 9, dadurch gekennzeichnet, daß die magnetische Feldstärke mittels einer im Luftspalt (3) vorgesehenen Feldplatte (7) gemessen wird und daß das Meßsignal einem internen Regelkreis zugeführt wird, in welcher das Meßsignal mit einem Sollsignal verglichen (bei 12'), die Signaldifferenz verstärkt (bei 13') und mit dem Ausgangssignal die Stromspule (2) des Elektromagneten angesteuert werden.

## Claims

1. Device for generating frictional torque in the form of a controllable electromagnetic clutch or brake which is actuable by continuous sliding and includes a drivable rotor, an anchor disc which may be relatively moved by magnetic force in a direction opposite to that of the rotor and a friction lining of non-magnetisable material which projects above the surface of its carrier and in operation is in frictional engagement via a working surface with an opposing surface on the anchor disc or on the rotor, characterised in that the frictional lining (6) comprises sintered carbon, that the working surface of the frictional lining is superfinished and that the power per unit surface (L) of the frictional engagement between the working surface (11) and the opposing surface (14) is maintained below a threshold of about L $\leq$ 0.5 W/cm$^2$, preferably L $\leq$ 0.2 W/cm$^2$.

2. Device for generating frictional torque as claimed in claim 1, characterised in that the frictional lining (6) projects beyond the component (4) on which it is mounted by not less than 0.04 mm.

3. Device for generating frictional torque as claimed in claim 2, characterised in that the frictional lining (6) is mounted on the rotor (4), that the opposing surface (14) is provided on the anchor disc (5).

4. Device for generating frictional torque as claimed in one of claims 1 to 3, characterised in that the working surface (11) of the frictional lining is flat superfinished with a roughness of less than 4 μm peak to valley height.

5. Device for generating frictional torque as claimed in one of claims 1 to 4, characterised in that the opposing surface (14) is also flat superfinished, preferably with a roughness of less than 4 μm peak to valley height.

6. Device for generating frictional torque as claimed in claim 7, characterised in that the working surface (11) or the opposing surface (14) is provided with recesses for receiving and optionally leading away abraded particles.

7. Device for generating frictional torque as claimed in claim 6, characterised in that the edges (17) of the recesses (16, 21) are broken.

8. Device for generating frictional torque as claimed in claim 6 or 7, characterised in that the recesses are formed by straight openings (16) or holes (21).

9. Device for generating frictional torque as claimed in one of claims 1 to 8, characterised in that the magnetic field strength of the magnetic field excited by the current coil (2) of the electromagnet is controlled.

**0 064 545**

10. Device for generating frictional torque as claimed in claim 9, characterised in that the magnetic field strength is measured by means of a field plate (7) provided in the air gap (3) and that the measured signal is supplied to an internal control circuit in which the measured signal is compared (at 12') with a reference signal, which amplifies (at 13') the difference signal and the current coil (2) of the electromagnet is controlled with the output signal.

**Revendications**

1. Dispositif produisant un couple de friction sous forme d'un embrayage électromagnétique ou d'un frein électromagnétique réglable, exploitable en glissement permanent, comportant un rotor qui peut être entrainé, un disque d'armature que la force magnétique peut entrainer en déplacement relatif en direction du rotor, ainsi qu'une garniture de friction qui est en un matériau non magnétisable, qui dépasse au-delà de la surface de son support et qui, en marche, collabore de par le frottement, par l'intermédiaire d'une surface active avec une contre-surface sur le disque d'armature ou sur le rotor, caractérisé en ce que la garniture de friction (6) est constituée de charbon fritté, en ce que la surface active de la garniture de friction est finement usinée et en ce que la puissance par unité de surface (L) du couplage par friction entre la surface active (11) et la contre-surface (14) est maintenue à l'intérieur d'une limite d'environ $L \leqq$ 0,5 W/cm$^2$, de préférence de $L \leqq 0,2$ W/cm$^2$.

2. Dispositif produisant un couple de friction selon la revendication 1, caractérisé en ce que la garniture de friction (6) dépasse d'au moins 0,04 mm par rapport au constituant (4) sur lequel elle est rapportée.

3. Dispositif produisant un couple de friction selon la revendication 2, caractérisé en ce que la garniture de friction (6) est rapportée sur le rotor (4), et en ce que la contre-surface (14) est prévue sur le disque d'armature (5).

4. Dispositif produisant un couple de friction selon l'une des revendications 1 à 3, caractérisé en ce que la surface active (11) de la garniture de friction est finement usinée plane avec une profondeur de rugosité de moins de 4 µm.

5. Dispositif produisant un couple de friction selon l'une des revendications 1 à 4, caractérisé en ce que la contre-surface (14) est également finement usinée plane, de préférence avec une profondeur de rugosité de moins de 4 µm.

6. Dispositif produisant un couple de friction selon la revendication 5, caractérisée en ce que la surface active (11) de la contre-surface (14) présente des creux pour recevoir et éventuellement évacuer la poussière produite par usure.

7. Dispositif produisant un couple de friction selon la revendication 6, caractérisé en ce que les arêtes (17) des creux (16, 21) sont chanfreinées.

8. Dispositif produisant un couple de friction selon la revendication 7, caractérisé en ce que les creux sont formés de saignées rectilignes (16) ou de perçages (21).

9. Dispositif produisant un couple de friction selon l'une des revendications 1 à 8, caractérisé en ce que l'intensité de champ magnétique du champ magnétique produit par la bobine (2) de l'électro-aimant est régulée.

10. Dispositif produisant un couple de friction selon la revendication 9, caractérisé en ce que l'on mesure l'intensité du champ magnétique au moyen d'une plaque de champ (7) prévue dans l'entrefer (3), et en ce que l'on amène le signal de mesure à un circuit de régulation interne dans lequel le signal de mesure est comparé à un signal prescrit (en 12'), dans lequel la différence entre les signaux est amplifiée (en 13'), la bobine (2) de l'électro-aimant étant pilotée par le signal de sortie.

FIG. 1

FIG.-2

FIG. 3

# FIG. 4

# FIG. 5